# FASCICULE DE BREVET EUROPEEN

(11) **EP 3 891 106 B1**
(45) Date de publication et mention de la délivrance du brevet: **03.05.2023**
(21) Numéro de dépôt: 19809499.7
(22) Date de dépôt: 02.12.2019
(51) Int. Cl.: C03B 13/08, C03C 10/00, F24C 15/10

(54) **ARTICLE VITROCÉRAMIQUE À TEXTURATION DE SURFACE ET PROCÉDÉ DE FABRICATION**
OBERFLÄCHENTEXTURIERTER GLASKERAMIKARTIKEL UND VERFAHREN ZU SEINER HERSTELLUNG
SURFACE-TEXTURED GLASS-CERAMIC ARTICLE AND PROCESS OF MANUFACTURE

(30) Priorité: 03.12.2018 FR 1872237
(43) Date de publication de la demande: 13.10.2021
(73) Titulaire: Eurokera S.N.C., 02400 Château-Thierry (FR)
(72) Inventeur: GAYOUT, Patrick, 93250 VILLEMOMBLE (FR); SIEUTAT, Clément, 02400 CHATEAU THIERRY (FR); ROUX, Nicolas, 02400 CHATEAU THIERRY (FR); VILATO, Pablo, 75014 PARIS (FR)
(74) Mandataire: Saint-Gobain Recherche
(86) Numéro de dépôt international: PCT/EP2019/083287
(87) Numéro de publication internationale: WO 2020/114958

(56) Documents cités:
- DE-A1-102016 105 039
- FR-A1- 2 838 507

## Description

La présente invention concerne le domaine des vitrocéramiques. Plus précisément, elle concerne un article, ou produit, en vitrocéramique, notamment une plaque vitrocéramique destiné(e) à servir de surface de cuisson et/ou de surface de meuble. Par article vitrocéramique ou en vitrocéramique, on entend un article à base d'un substrat (tel qu'une plaque) en matériau vitrocéramique, ledit substrat pouvant le cas échéant être muni d'accessoires ou d'éléments supplémentaires, décoratifs ou fonctionnels, requis pour son usage final, l'article pouvant désigner tout aussi bien le substrat seul que celui muni d'équipements supplémentaires (par exemple une plaque de cuisson munie de son bandeau de commande, de ses éléments de chauffage, etc).

Une vitrocéramique est à l'origine un verre, dit verre précurseur ou verre-mère ou green-glass, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : en particulier, pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants. Les plaques vitrocéramiques doivent également présenter une résistance mécanique suffisante telle qu'exigée dans leur domaine d'utilisation. En particulier, pour pouvoir être utilisée comme plaque de cuisson dans le domaine de l'électroménager ou comme surface de meuble, une plaque vitrocéramique doit présenter une bonne résistance à la pression, aux chocs (support et chute d'ustensiles, etc), etc.

Les plaques de cuisson vitrocéramiques les plus répandues sont de couleur sombre, en particulier de couleur noire ou brune ou brun-orangé, mais il existe également des plaques d'aspect plus clair (en particulier de couleur blanche, présentant par exemple un flou d'au moins 50% comme décrit dans le brevet FR2766816), voire des plaques transparentes munies généralement de revêtements opacifiants ou encore munies de filtres pour des effets de couleur particuliers.

La face supérieure ou externe (en position d'utilisation) et la face inférieure ou interne (en position d'utilisation) de ces plaques vitrocéramiques sont traditionnellement de type lisse/lisse ou de type lisse/(munie de) picots, les picots étant traditionnellement des bosses au sommet arrondi dont la hauteur est de l'ordre de 80-100 µm. La ou les surfaces lisses permettent notamment un bon contact avec des récipients de cuisson et/ou un bon transfert de la chaleur dans le cas des plaques de cuisson, et offrent une plus grande facilité de nettoyage ou un aspect esthétique plus recherché, mais sont aussi plus fragiles et vulnérables aux micro-rayures. Les picots permettent quant à eux d'améliorer la résistance mécanique de la plaque, de limiter si besoin est la vision des éléments sous ou derrière la plaque (tels que les composants électriques sous-jacents pour les plaques de cuisson) et/ou d'éviter l'éblouissement en cas d'utilisation de sources lumineuses, mais déforment la vision des éléments (notamment d'affichage) sous-jacents et rendent ainsi plus complexe l'utilisation d'afficheurs (la plupart des éléments d'affichage ou de décoration étant maintenant rapportés derrière la plaque et rétroéclairés) ou l'affichage net de différentes informations (sources lumineuses sous-jacentes moins nettes, déformations d'afficheurs sous-jacents lorsqu'ils sont observés de biais ou non placés au contact de la plaque, définition insuffisantes des contours de motifs délimités par des opacifiants sous-jacents, etc.). Les motifs fins nécessaires à l'affichage de pictogrammes ne peuvent ainsi être réalisés sans surcout important lié à la mise en place de solutions spécifiques, que sur du lisse / lisse. DE 10 2016 105039 A1 SCHOTT AG [DE] 21.09.2017 décrit un substrat vitrocéramique dont la surface présente des structures partiellement remplies d'une substance diélectrique, telle que de la silicone, afin de former une texture de surface réduisant la dispersion lumineuse.

La présente invention a donc cherché à mettre au point des produits vitrocéramiques améliorés, en particulier de nouvelles plaques vitrocéramiques destinées à être utilisées avec un ou des éléments de chauffage telles que des plaques de cuisson, ou destinées à servir de surface de meubles, en proposant une solution simple à mettre en oeuvre et efficace permettant notamment de préserver la netteté des contours des motifs lumineux (c'est-à-dire destinés à être éclairés) apparaissant en face supérieure des vitrocéramiques, lorsque lesdits motifs sont éclairés par une ou des sources lumineuses (notamment situées en face inférieure des vitrocéramiques), sans nuire aux autres propriétés recherchées pour l'usage desdites vitrocéramiques, notamment sans nuire à leur facilité d'entretien et de nettoyage, ni à leur résistance, en particulier mécanique, aux rayures et à l'abrasion, et le cas échéant thermique, et sans être préjudiciable à leur durée de vie, tout en veillant à proposer une solution simple et si possible flexible autorisant la présence de décors ou de fonctions additionnelles selon les besoins.

Ce but est atteint grâce au nouvel article vitrocéramique selon la revendication 1, les revendications dépendantes étant des modes avantageux de réalisation.

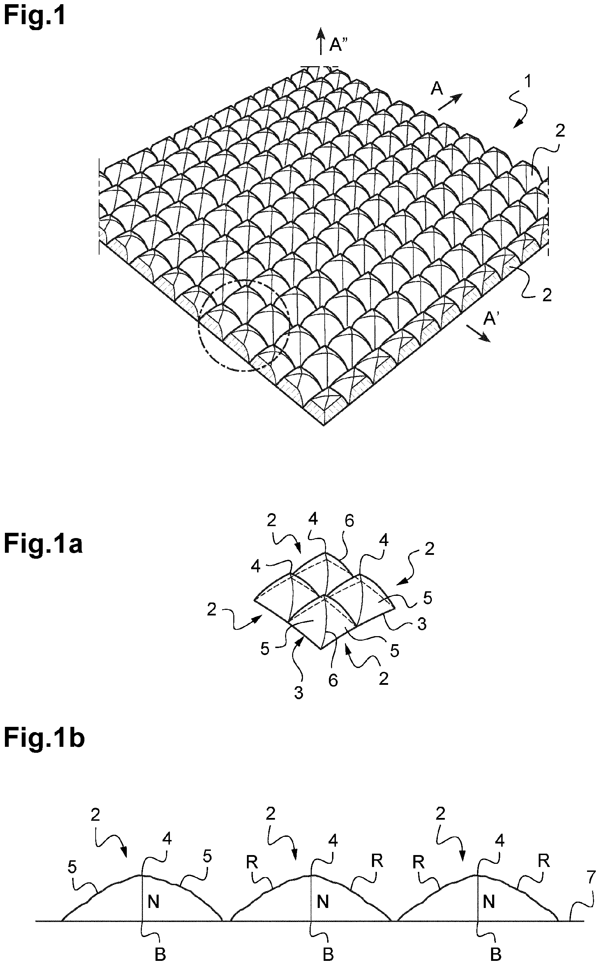

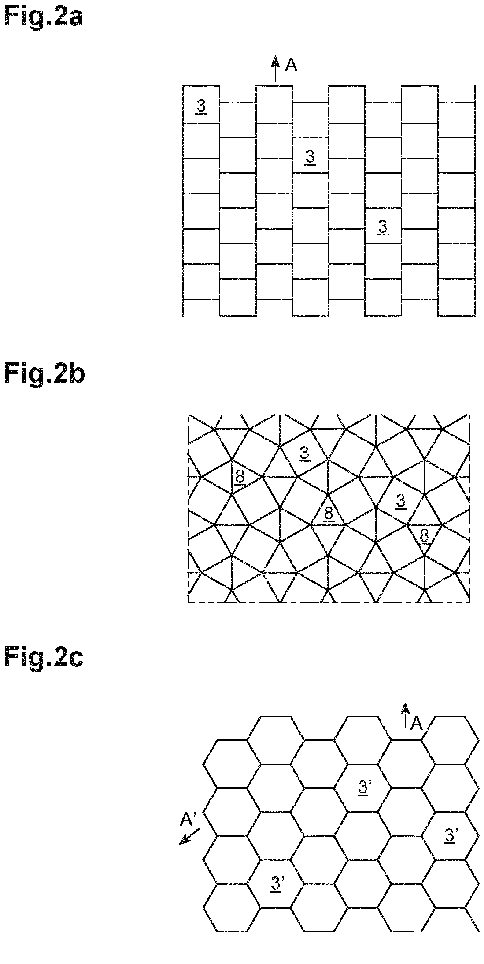

Par motifs pyramidaux formant la texturation précitée on entend une pluralité de motifs géométriques en relief (par rapport à un plan général de la face présentant ladite texturation), chaque motif présentant une base, un sommet, correspondant au(x) point(s) le(s) plus éloigné(s) par rapport à la face/au plan général de ladite face, et n face(s) ou surface(s) latérale(s) joignant la base au sommet, le sommet étant le plus généralement un point en lequel la ou les faces latérales convergent et/ou se rejoignent mais pouvant également être le cas échéant une surface, plus petite que celle de la base, où la ou les faces latérales convergent et/ou se rejoignent, dans le cas par exemple d'une pyramide de type tronquée (en son sommet) ou tronconique). La base est préférentiellement une base polygonale de n côtés, comme illustré ultérieurement (figures 1, 1a, 1b et 2 a à 2c), n allant de préférence de 3 à 6.

Les faces latérales sont avantageusement approximativement triangulaires ou trapézoïdales ou quadrilatérales, ces faces reliant la base de n côtés au sommet. Par approximativement (triangulaires ou trapézoïdales ou quadrilatérales), on entend que les arêtes desdites faces latérales ne sont pas nécessairement parfaitement droites mais peuvent présenter des petites variations telles que des ondulations et/ou des courbures, comme illustré notamment ultérieurement en figure 1b. De la même façon, les faces latérales ne sont pas nécessairement planes mais peuvent être courbées. La forme pyramidale de chaque motif est donc une forme (géométrique, relativement simple et régulière),avec une base, en particulier polygonale, chaque motif ayant une section transversale, parallèlement au plan général de la face texturée dans la zone texturée considérée (ce plan général étant le plan à la base des motifs, contenant le cas échéant les points de jonction entre les motifs et le cas échéant les autres points éventuels de ladite face qui n'appartiennent pas aux motifs, le plan général de la face texturée dans la zone texturée considérée étant aussi généralement parallèle au plan général du substrat), qui décroît en s'éloignant de la face précitée de la plaque, depuis une base jusqu'au sommet du motif.

Selon un mode de réalisation avantageux de l'invention, la base de chaque motif est une base carrée (comme illustré par exemple en figures 1 et 2a), mais d'autres formes de polygones, en particulier et avantageusement de polygones réguliers (dont les côtés sont tous égaux/ de même longueur), peuvent être choisies, en particulier une forme hexagonale (comme la forme d'hexagone régulier illustrée en figure 2c), ou triangulaire (comme la forme de triangle équilatéral illustré en figure 2b), voire des formes polygonales symétriques de type rectangulaires, etc. Il est également possible d'avoir un mélange de deux ou plusieurs types de motifs pyramidaux différents (mais répondant chacun à la définition de l'invention précitée) formant la texturation définie selon l'invention, ces différents types de motifs présentant des bases de forme différentes (sur le modèle de celui illustré en figure 2b). En outre les bases des motifs peuvent être réparties sur la surface texturée de façon à former un ou plusieurs alignements (comme en figure 1) ou rangées de motifs, les motifs d'une rangées à l'autre pouvant être face à face ou décalés (par exemple distribution en quinconce illustrée en figure 2a ou en nid d'abeille illustrée en figure 2c), et ou peuvent être répartis suivant des dispositions plus dispersées (préférentiellement semi-régulières telles que la disposition de type "pavage carré adouci" illustrée en figure 2b, constituée de carrés et de triangles équilatéraux). De préférence, pour le ou chaque type de motif formant la texturation, la normale à la base dudit motif passant par l'isobarycentre de ladite base passe également par le sommet (dans le cas d'un sommet se réduisant à un point) ou par l'isobarycentre du sommet (dans le cas d'un sommet formé par un ensemble de points équidistants de la base) dudit motif de façon à avoir une pyramide régulière et/ou de forme symétrique. De façon particulièrement avantageuse, chaque motif de type polygonal présente des faces latérales qui sont toutes de même pente relative, voire de même forme et dimension. De préférence également la texturation (formée par l'ensemble des motifs pyramidaux dans la zone considérée) selon l'invention est isotrope.

La pente moyenne quadratique des motifs, (également appelée "pente moyenne quadratique du profil", désignée par les lettres Rdq ou RΔq, et exprimée en degrés), est un paramètre calculé à partir du profil de rugosité selon la norme ISO 4287. Ce profil de rugosité, ainsi que toutes les valeurs et paramètres qui en sont extraits selon la présente invention (pente moyenne quadratique, hauteur moyenne, dimensions moyennes et périodicité) sont, dans la présente invention, mesurés à l'aide d'un profilomètre, le profilomètre utilisé dans la présente invention étant un profilomètre sans contact commercialisé par la société Stil SA sous la référence Micromesure 2, équipé d'un contrôleur CCS PRIMA et d'un crayon optique OP1000N utilisant une technologie de confocal chromatique pour une mesure sans contact, les caractéristiques de la tête optique étant les suivantes :
- ouverture numérique 0.7
- angle de mesure maximum : 45° (pente maximale pouvant être mesurée avec ce profilomètre)
- résolution en Z : 0,03 microns
- résolution latérale : 1,5 microns
- gamme de mesure : 1 mm (hauteur maximale de motif pouvant être mesurée avec ce crayon optique),
la surface étant filtrée avec un filtre passe bande gaussien de longueurs de coupure de 8 mm et de 0.08 mm pour éliminer les ondulations de grandes périodes et le bruit de mesure, le traitement et l'analyse étant réalisés avec le logiciel MOUNTAINS de la société Digital Surf, les paramètres de rugosité tels que le Rdq étant extraits selon la norme ISO 4287 avec une longueur de base de 800 microns, la surface mesurée (de la zone texturée considérée) étant de 30 mm X 30 mm avec un pas d'échantillonnage de 20 µm x 20 µm.

De façon particulièrement préférée selon l'invention, la pente moyenne quadratique (Rdq) des motifs selon l'invention est notamment d'au moins 0.3 degrés, en particulier d'au moins 0.4°, voire d'au moins 0.7°, voire d'au moins 0.8°, et est préférentiellement inférieure à 2.5°, en particulier inférieure à 2°, voire inférieure à 1.5.

De préférence également selon l'invention, la hauteur (ou profondeur) moyenne (H) des motifs (la hauteur d'un motif correspondant à la plus grande dimension du motif perpendiculairement au plan général de la face texturée dans la zone texturée considérée, ou encore correspondant à la hauteur du motif à son sommet par rapport au plan de sa base, et la hauteur moyenne (H) des motifs étant la moyenne arithmétique des hauteurs des motifs mesurées) est en outre avantageusement supérieure à 5 µm et inférieure à 440 µm, et en particulier est d'au moins 10 µm, notamment est supérieure à 15 µm, plus particulièrement d'au moins 20 µm, et plus préférentiellement est également inférieure à 110 µm, et de façon particulièrement avantageuse inférieure à 75 µm, notamment inférieure à 45 µm, en particulier inférieure à 40 µm, notamment inférieure ou égale à 35 µm. Dans un mode de réalisation particulièrement préféré selon l'invention, cette hauteur est dans la gamme allant de 20 à 35 µm.

Les dimensions (longueur et largeur) de la base de chacun des motifs sont par ailleurs préférentiellement comprises (qu'il s'agisse de la longueur ou de la largeur) en moyenne (moyenne arithmétique) entre 0.6 et 7.5 mm, en particulier se situent dans une gamme allant de 1 à 4.8 mm et les motifs présentent également préférentiellement une périodicité (ou un pas ou une distance entre les sommets de 2 motifs consécutifs) en moyenne (moyenne arithmétique) entre 0.6 et 9.6 mm, et de façon particulièrement préférée se situant dans une gamme allant de 1.2 à 4.8 mm, les motifs étant préférentiellement jointifs. La hauteur, les dimensions et la périodicité des motifs sont mesurées avec un profilomètre et en utilisant un logiciel comme précédemment indiqués, les mesures étant effectuées sur plusieurs zones (profils) de la zone texturée considérée prises au hasard mais représentatives de la texturation, le profil analysé étant d'environ 30 mm correspondant à x périodes de motifs, les moyennes arithmétiques des valeurs considérées étant calculées pour l'ensemble des motifs de ces zones.

La texturation selon l'invention est présente en au moins une zone, en surface, sur au moins une partie d'une face, avantageusement la face inférieure ou interne (en position d'utilisation), dudit substrat, voire sur plusieurs zones sur une ou plusieurs faces, voire sur la totalité ou la quasi-totalité d'une ou plusieurs faces. Selon un mode de réalisation particulier selon l'invention, la texturation est présente sur la face inférieure ou interne du substrat à l'emplacement du bandeau de commande et/ou dans chaque zone où se trouve un motif lumineux. Dans un autre mode de réalisation, la texturation occupe (ou s'étend sur) la totalité de la face inférieure ou la quasi-totalité (au moins 90% de la surface) de ladite face.

Le taux de recouvrement (ou taux de couverture) de la texturation selon l'invention dans la zone concernée est de préférence d'au moins 50%, en particulier compris entre 53 et 100%, notamment comprise entre 90% et 100%, et de préférence proche de ou égal à 100% (bornes incluses), ce taux étant défini comme la surface réellement couverte par les motifs pyramidaux divisée par la surface de ladite zone, le taux de recouvrement étant en pratique mesurable sur une surface d'analyse de 10 X 10 motifs dans la zone texturée considérée. Le taux de recouvrement est mesuré par exemple en utilisant une loupe mono ou binoculaire, ou encore une caméra de type CCD muni d'une optique dont le champ de vision est connu, pour la prise d'image et en utilisant un logiciel libre ImageJ pour l'analyse de l'image).

Le substrat peut être à base de toute vitrocéramique, ce substrat présentant avantageusement un CTE nul ou quasi-nul, en particulier inférieur (en valeur absolue) à 30.10⁻⁷ K⁻¹ entre 20 et 700°C, notamment inférieur à 15.10⁻⁷K⁻¹, voire inférieur à 5.10⁻⁷ K⁻¹ entre 20 et 700°C.

L'invention vise plus particulièrement les substrats d'aspect sombre, faiblement transmissifs et peu diffusants, notamment à base de toute vitrocéramique ayant, de manière intrinsèque, une transmission lumineuse TL inférieure à 40%, en particulier inférieure à 5%, notamment de 0.2 à 2% pour des vitrocéramiques jusqu'à 6 mm d'épaisseur, et une transmission optique (déterminée de façon connue en faisant le rapport entre l'intensité transmise et l'intensité incidente à une longueur d'onde donnée) entre 0.5 et 3% pour une longueur d'onde de 625 nm comprise dans le domaine du visible. Par « de manière intrinsèque», on entend que le substrat possède une telle transmission en lui-même, sans la présence d'un quelconque revêtement. Les mesures optiques sont faites selon la norme EN 410. En particulier, la transmission lumineuse TL est mesurée selon la norme EN 410 en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante (en particulier avec le spectrophotomètre commercialisé par la société Perkin Elmer sous la référence Lambda 950).

En particulier, on utilise un substrat d'aspect noir ou brun, permettant, en combinaison avec des sources lumineuses placées dessous, d'afficher des zones lumineuses ou des décors, tout en masquant les éventuels éléments sous-jacents. Il peut être notamment à base d'une vitrocéramique noire comprenant des cristaux de structure β-quartz au sein d'une phase vitreuse résiduelle, la valeur absolue de son coefficient de dilatation étant avantageusement inférieure ou égale à 15.10⁻⁷K⁻¹, voire à 5.10⁻⁷K⁻¹, telle que la vitrocéramique des plaques commercialisées sous le nom Kerablack+ par la société Eurokera. Il peut s'agir en particulier d'une vitrocéramique affinée à l'étain, par exemple de composition telle que décrite dans la demande de brevet WO 2012/156444, ou encore d'une vitrocéramique obtenue comme décrit dans la demande de brevet WO2008053110 (affinage au(x) sulfure(s)), ou encore d'une vitrocéramique de composition telle que décrite dans la demande de brevet EP0437228 ou US5070045 ou FR2657079, etc.

L'article selon l'invention peut être notamment une plaque de cuisson ou tout article mobilier intégrant (ou comprenant, ou formé de) au moins un substrat en (matériau) vitrocéramique (le substrat étant le plus couramment sous forme d'une plaque, venant s'intégrer ou se monter dans le meuble et/ou combinée à d'autres éléments pour former le meuble), ledit substrat pouvant le cas échéant présenter des zones à caractère d'affichage (en combinaison par exemple avec des sources émettant de la lumière) ou des zones décorées, ou être combiné avec des éléments chauffants. Dans son application la plus courante, l'article selon l'invention est destiné à servir de plaque de cuisson, cette plaque étant généralement destinée à être intégrée dans une table de cuisson ou cuisinière comprenant également des éléments chauffants, par exemple des foyers radiants ou halogènes ou des éléments de chauffage par induction. Dans une autre application, l'article selon l'invention est un plan de travail en vitrocéramique ou un ilot central, le cas échéant avec différents affichages et sans nécessairement de zones de cuisson, voire un meuble de type console (le substrat formant par exemple la partie supérieure), etc..

Le substrat (ou l'article selon l'invention lui-même s'il n'est formé que du substrat) est généralement (sous forme de) une plaque, destinée notamment à être utilisée avec, en particulier à couvrir ou recevoir, au moins une source lumineuse et/ou un élément de chauffage ou destinée à servir de surface de meuble. Ce substrat (ou respectivement cette plaque) est généralement de forme géométrique, en particulier rectangulaire, voire carrée, voire circulaire ou ovale, etc, et présente généralement une face tournée vers l'utilisateur en position d'utilisation (ou face visible ou externe, généralement la face supérieure en position d'utilisation), une autre face généralement cachée, par exemple dans un châssis ou caisson de meuble, en position d'utilisation (ou face interne ou face inférieure en position d'utilisation), et une tranche (ou chant ou épaisseur). Généralement selon l'invention, seule la face cachée est texturée, l'autre face (généralement la face supérieure ou externe) étant en particulier généralement plane et lisse et/ou pouvant aussi présenter localement au moins une zone en relief et/ou au moins une zone en creux et/ou au moins une ouverture, etc.

L'épaisseur du substrat vitrocéramique est généralement d'au moins 2 mm, notamment d'au moins 2.5 mm, et est avantageusement inférieure à 6 mm, en particulier est de l'ordre de 4 à 6 mm. Le substrat est de préférence une plaque plane ou quasi-plane (en particulier avec une flèche inférieure à 0,1% de la diagonale de la plaque, et de préférence de l'ordre de zéro).

Le substrat peut le cas échéant être revêtu de revêtement(s) ou couche(s) à effet fonctionnel et/ou décoratif, déposé(s) en particulier dans d'autres zones que les zones revêtues de la texturation selon l'invention, tels que des motifs habituels à base d'autres émaux ou une couche de peinture opacifiante, ou une ou des couches fonctionnelle de type couche anti-rayure, couche anti-débordement, etc.

L'article selon l'invention peut par ailleurs comprendre, associés ou combinés au substrat, une ou plusieurs sources lumineuses et/ou un ou plusieurs éléments de chauffage (ou éléments chauffants, tels qu'un ou plusieurs éléments radiants ou halogènes et/ou un ou plusieurs brûleurs à gaz atmosphérique et/ou un ou plusieurs moyens de chauffage par induction), généralement placés en face cachée du substrat. La ou les sources peuvent être intégrées dans ou couplées à une ou des structure(s) de type afficheur(s), à un bandeau de commande électronique à touches sensitives et affichage digital, etc, et peuvent être avantageusement formées par des diodes électroluminescentes plus ou moins espacées, éventuellement associées à un ou plusieurs guides optiques.

L'article peut également être muni de (ou associé avec des) élément(s) fonctionnel(s) supplémentaire(s) (cadre, connecteur(s), câble(s), élément(s) de commande), etc.

La texturation selon l'invention contribue au masquage d'éléments sous-jacents (c'est-à-dire situés du côté du substrat opposé à celui tourné vers l'utilisateur, en particulier sous la face inférieure ou du côté de la face interne) au repos tout en permettant une détection nette des motifs lumineux sous-jacentes souhaités émis par les éléments de chauffage et/ou sources lumineuses et/ou afficheurs sous-jacents présents le cas échéant lorsqu'ils sont activés (ces motifs pouvant être le cas échéant délimités par des revêtements opacifiants ou boitiers sous-jacents). De préférence, la distance entre le plan général de la face texturée du substrat (plan de la base des motifs) dans la zone texturée considérée et la partie (ou l'extrémité ou le plan) supérieur(e) (destiné(e) à être éclairée) des éléments de chauffage et/ou sources lumineuses et/ou afficheurs sous-jacents présents le cas échéant et dont la vision nette à l'état de marche est recherchée est inférieure à 5 mm en particulier inférieure à 4 mm. On note à ce sujet que la vision des mêmes motifs lumineux au travers d'une plaque munie de picots traditionnels n'est pas possible au-delà d'une distance de 2 mm, alors que selon l'invention la vision de ces mêmes motifs lumineux, de surcroit nette, est possible jusqu'à au moins 5 mm.

L'invention a ainsi permis la mise au point d'un produit vitrocéramique à surface texturée aux endroits souhaités (par exemple les zones de commande ou d'affichage ou les zones de chauffage, etc) permettant notamment de préserver la netteté des contours des motifs lumineux (c'est-à-dire destinés à être éclairés) apparaissant en face supérieure des vitrocéramiques, lorsque lesdits motifs sont éclairés par une ou des sources lumineuses (notamment situées en face inférieure des vitrocéramiques), sans nuire aux autres propriétés recherchées pour l'usage desdites vitrocéramiques et tout en conservant des produits en vitrocéramique pérennes et d'entretien facile. L'article selon l'invention présente une bonne tenue thermique (il ne subit en particulier pas de dégradation thermique à des températures supérieures ou égales à 400°C pouvant être atteintes notamment dans des applications telles que l'utilisation en tant que plaques de cuisson) compatible avec l'utilisation de divers types de chauffages, et ne pose pas de problèmes d'entretien, de rayures ou d'abrasion. Il présente également une bonne résistance à la rayure. Le substrat peut être facilement nettoyé et présente une durée de vie élevée. L'article permet à la fois d'obtenir une bonne qualité optique, une bonne résistance mécanique, tout en offrant un bon rendement de fabrication (l'entraînement par les rouleaux de laminage permettant la texturation étant par exemple facilité par rapport à la fabrication de plaques lisse/lisse).

Comme évoqué précédemment, la texturation selon l'invention peut être obtenue notamment lors du formage de la plaque, par laminage entre deux rouleaux, généralement métalliques ou en céramique, dont au moins l'un est pourvu de ladite texturation (le transfert de la gravure du rouleau ne s'effectuant généralement pas complètement, le fond de la texturation étant en particulier difficilement atteint, les motifs sur le rouleau sont de préférence plus profonds que les motifs pyramidaux cibles, la profondeur des motifs du rouleau étant ajustée, le cas échéant empiriquement, selon les caractéristiques des motifs recherchés pour le substrat), la texturation se faisant donc par action sur le verre-mère (action dans la masse) au cours de la fabrication de la plaque et avant céramisation, par transfert d'un état de surface différencié créé sur l'un des rouleaux de laminage, ou les deux, à la surface du ruban de verre en sortie de ces rouleaux. La fabrication se fait donc sans opération coûteuse ou complexe supplémentaire et sans risque de blesser ou former des microfractures à la surface de la vitrocéramique (risques pouvant découler de traitements, notamment dans la plaque vitrocéramique, opérés en reprise après fabrication de la vitrocéramique), donc sans fragiliser celle-ci, laquelle peut donc conserver ses propriétés mécaniques et sa facilité de nettoyage.

La présente invention concerne ainsi également un procédé de fabrication de l'article vitrocéramique selon l'invention, à partir d'un substrat en verre (le substrat en verre-mère devant former le substrat vitrocéramique par céramisation) dans lequel les motifs pyramidaux sont formés par laminage de la plaque avant céramisation.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller en particulier jusqu'à 700°C. La céramisation comprend généralement une étape d'élévation progressive de la température jusqu'au domaine de nucléation, une étape de traversée en plusieurs minutes (par exemple entre 5 et 60 minutes) de l'intervalle de nucléation (par exemple entre 650 et 830°C), une nouvelle élévation de la température pour permettre la croissance des cristaux (céramisation dans un intervalle allant par exemple de 850 à 1000°C, avec maintien de la température du palier de céramisation pendant plusieurs minutes (par exemple de 5 à 30 minutes) puis un refroidissement rapide jusqu'à la température ambiante.

Le cas échéant, le procédé comprend également une opération de découpe (généralement avant céramisation), par exemple par jet d'eau, traçage mécanique à la molette, etc. suivie par une opération de façonnage (meulage, biseautage,...).

Les exemples suivants illustrent sans la limiter la présente invention en se référant aux dessins annexés dans lesquels :
- la figure 1 représente une vue partielle en perspective (agrandie) de la zone texturée d'un article texturé selon l'invention, un schéma reprenant les motifs de la zone entourée sur la figure 1 étant donné en figure 1a ;
- la figure 1b est une coupe transversale, partielle et schématique, de la texturation l'article de la figure suivant un plan passant par les sommets d'une rangée de motifs;
- la figure 2a représente en vue partielle de dessus, représentant la disposition de la base des motifs, un premier arrangement des motifs de la texturation selon l'invention;
- la figure 2b représente en vue partielle de dessus, représentant la disposition de la base des motifs, un deuxième arrangement des motifs de la texturation selon l'invention;
- la figure 2c représente en vue partielle de dessus, représentant la disposition de la base des motifs, un troisième arrangement des motifs de la texturation selon l'invention;
- la figure 3a représente le type de rendu optique obtenu pour un afficheur lumineux vu à travers une plaque vitrocéramique lisse/lisse, la distance entre la face inférieure de la vitrocéramique et l'afficheur étant de 5 mm;
- la figure 3b représente le type de rendu optique obtenu pour un afficheur lumineux lorsqu'il est vu à travers une plaque vitrocéramique selon l'invention présentant une texturation isotrope formée de motifs pyramidaux de base carrée de largeur/longueur (en moyenne) égale à 2.4 mm, les motifs étant jointifs, et le pas (moyen) étant de 2.4 mm, ces motifs pyramidaux présentant une hauteur moyenne comprise entre 20 et 25 µm et une pente moyenne quadratique égale à 0.99 degrés, la distance entre le plan général de la face texturée et la partie supérieure de l'afficheur étant de 5 mm;
- la figure 3c représente le type de rendu optique obtenu pour un afficheur lumineux lorsqu'il est vu à travers une plaque vitrocéramique selon l'invention présentant une texturation isotrope formée de motifs pyramidaux de base carrée de largeur/longueur égale à 2.4 mm, les motifs étant jointifs, et le pas étant de 2.4 mm, ces motifs pyramidaux présentant cette fois une hauteur moyenne comprise entre 60 et 75 µm et une pente moyenne quadratique égale à 2.95 degrés, la distance entre le plan général de la face texturée et la partie supérieure de l'afficheur étant de 5 mm;

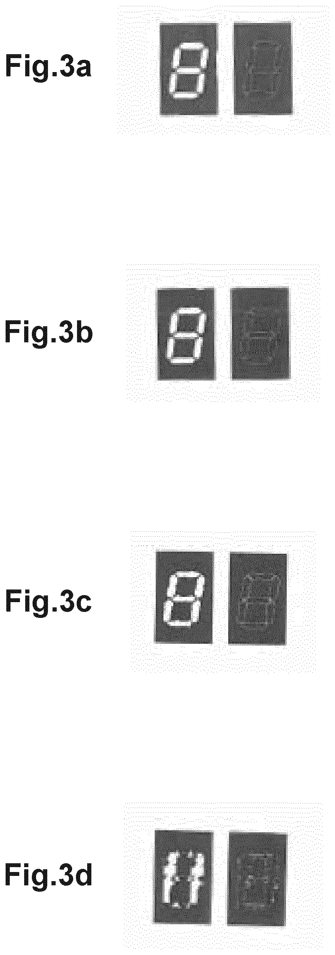

- la figure 3d représente le type de rendu optique obtenu pour un afficheur lumineux lorsqu'il est vu à travers une plaque vitrocéramique non conforme à l'invention présentant une texturation isotrope formée de motifs pyramidaux avec une base carrée de largeur/longueur égale à 2.4 mm et un pas de 2.4 mm, les motifs étant jointifs, mais ces motifs présentant cette fois une hauteur égale à 88 µm et une pente moyenne quadratique égale à 3.93 degrés, ou bien encore présentant une hauteur égale à 220 µm et une pente moyenne quadratique égale à 9.67 degrés, la distance entre le plan général de la face texturée et la partie supérieure de l'afficheur étant de 5 mm.

Dans ces exemples, l'article selon l'invention est sous forme d'un substrat en vitrocéramique noire translucide, commercialisé sous la référence KeraBlack+ par la société Eurokera et présentant une épaisseur de 4 mm, la face inférieure dudit substrat étant munie d'une texturation (obtenue par laminage selon l'invention) sous forme de motifs pyramidaux.

Dans la figure 1 représentant une vue partielle agrandie et en perspective de la texturation 1 (couvrant par exemple toute la face inférieure) de la face inférieure d'un tel substrat, muni dans le présent cas d'un exemple de texturation selon l'invention, les motifs pyramidaux 2 de la texturation présentent par exemple chacun une base 3 carrée, un sommet 4, et quatre face(s) latérale(s) 5 approximativement triangulaires joignant la base au sommet, le sommet étant un point en lequel les faces latérales convergent. Les arêtes 6 des faces latérales, de même que lesdites faces 5, ne sont ici pas parfaitement droites mais courbées, comme illustré respectivement en figure 1a et 1b. Chaque motif a ainsi une section transversale (représentée en figure 1b), parallèlement au plan général 7 de la face texturée dans la zone texturée considérée qui décroît en s'éloignant de la face précitée de la plaque, depuis la base jusqu'au sommet du motif. Dans l'exemple représenté en figures 1, 1a et 1b,b les bases des motifs sont en outre réparties sur la surface texturée de façon à former des alignements ou rangées (disposés suivants différentes directions A, A' A", etc), les motifs d'une rangée à l'autre étant face à face. Chaque motif est de forme régulière et symétrique, la normale N à la base de chaque motif passant par l'isobarycentre B de ladite base passant notamment par le sommet 4 dudit motif, les faces latérales de chaque motif étant toutes de même pente relative R, de même forme et de même dimension, la texturation étant en outre isotrope.

La pente moyenne quadratique des motifs (Rdq), évaluée selon la norme ISO 4287 sur une surface de 30 X 30 mm en utilisant un profilomètre sans contact commercialisé par la société Stil sous la référence Micromesure 2, et un logiciel de calcul MOUNTAINS de la société Digital Surf comme précédemment indiqué, est ici par exemple d'environ 0.8 à 2.95°, de préférence de 0.8 à 2.5°, voire de 0.8 à 2° ou 1.5°, la hauteur (ou profondeur) (H) moyenne des motifs étant par exemple d'environ 20 à 25 µm, et les dimensions (longueur et largeur) de la base de chacun des motifs étant par exemple de l'ordre de 2.2 à 2.6 mm et les motifs présentant également une périodicité identique, les motifs étant jointifs. Le taux de recouvrement de la texturation est en outre de 100%.

Dans la variante de texturation selon l'invention présentée en figure 2a, les motifs sont de même type que précédemment à la différence que les motifs, disposés en rangées suivant une direction A du plan général du substrat, sont décalés d'une rangée à l'autre de façon à avoir une distribution en quinconce illustrée en figure 2a.

Dans la variante de texturation selon l'invention présentée en figure 2b, les motifs sont de même type que précédemment à la différence que ces motifs sont disposés de façon à avoir une disposition de type "pavage carré adouci", les zones triangulaires 8 entre les motifs pouvant soit être planes, soit être occupées par un autre type de motifs pyramidaux selon l'invention présentant une base sous forme de triangle équilatéral, des faces latérales (non représentées) sous formes chacune d'un triangle équilatéral se rejoignant en un sommet ponctuel ou par exemple sous forme de trapèzes convergeant vers un sommet tronqué, la hauteur et la pente moyenne quadratique de ces autres motifs étant préférentiellement conformes à l'invention et en particulier de même ordre que celles des motifs de base carrée.

Dans la variante de texturation selon l'invention présentée en figure 2c, les motifs sont des motifs de base 3' hexagonale régulière disposés en nid d'abeille.

Dans les exemples 3a à 3d illustrant les résultats obtenus (notamment par simulation optique) en utilisant différentes texturations en face inférieure, on a caractérisé la netteté/la déformation d'un afficheur lumineux observé au travers du substrat (vue depuis la face supérieure), l'afficheur étant un afficheur 7 segments de référence HDSP-F101 de la société Broadcom et l'affichage observé se présentant sous forme d'un chiffre 8 lumineux rouge, Les bords du chiffre 8 éclairé apparaissant en face supérieure ont été extraits à partir de l'image apparaissant en surface et représentée à gauche des figures 3a à 3d de façon à obtenir une longueur du périmètre en nombre de pixels simulée à droite des figures 3a à 3d. Cette valeur (longueur de périmètre) a été comparée à la valeur de référence obtenue sur l'afficheur vu à travers une vitrocéramique lisse/lisse et le rapport entre les 2 valeurs (longueur de périmètre de l'image obtenue sur longueur de périmètre de la référence) a été calculé, ce rapport étant appelé "rapport de bords" (ou « edge ratio »), de façon à caractériser la déformation de l'afficheur derrière la vitrocéramique par rapport à un afficheur nu.

Le rapport obtenu dans le cas de la figure 3a était de 0; celui dans le cas de la figure 3b (article selon l'invention) était de 3.2, celui dans le cas de la figure 3c (article selon l'invention) était de 9.2, et celui dans le cas de la figure 3d était de 12.5 à 61.5, le rapport de bords devant être strictement inférieur à 9.5, et de préférence inférieur à 9.3, pour les produits recherchés selon l'invention (la déformation restant alors très faible et acceptable). Le rendu optique variait relativement peu et de manière peu détectable visuellement entre les 2 exemples (3b et 3c) selon l'invention, tandis que le rendu optique se dégradait d'autant plus que la pente moyenne quadratique des motifs (en même temps que la hauteur moyenne) augmentait dans les contre-exemples (illustrés en 3d).

Les articles selon l'invention peuvent notamment être utilisées avec avantage pour réaliser une nouvelle gamme de plaques de cuisson pour cuisinières ou tables de cuisson ou une nouvelle gamme de tables de travail, consoles, crédences, ilots centraux, etc.

## Revendications

1. Article vitrocéramique, comprenant au moins un substrat, tel qu'une plaque, en vitrocéramique, ledit substrat présentant, en au moins une zone d'une face, une texturation de surface sous forme de motifs pyramidaux tels que la pente moyenne quadratique (Rdq) desdits motifs est d'au moins 0.25 degrés et est inférieure à 3 degrés, lesdits motifs pyramidaux étant susceptibles d'être formés par laminage du substrat.

2. Article vitrocéramique selon la revendication 1, **caractérisé en ce que** la base de chaque motif pyramidal est un polygone régulier, en particulier un carré ou un hexagone régulier.

3. Article vitrocéramique selon l'une des revendications 1 à 2, **caractérisé en ce que** la hauteur (H) desdits motifs est d'au moins 5 µm et de préférence d'au moins 10 µm, notamment est supérieure à 15 µm, plus particulièrement d'au moins 20 µm, et est également inférieure à 440 µm, notamment inférieure à 110 µm et de préférence inférieure à 75 µm, notamment inférieure à 45 µm, en particulier inférieure à 40 µm, notamment inférieure ou égale à 35 µm.

4. Article vitrocéramique selon l'une des revendications 1 à 3, **caractérisé en ce que** la pente moyenne quadratique (Rdq) desdits motifs est d'au moins 0.25°, notamment d'au moins 0.3 °, en particulier d'au moins 0.4°, voire d'au moins 0.7°, voire d'au moins 0.8°, et est préférentiellement inférieure à 2.5°, en particulier inférieure à 2°, voire inférieure à 1.5°.

5. Article vitrocéramique selon l'une des revendications 1 à 4, **caractérisé en ce que** la face présentant ladite texturation de surface est la face inférieure ou interne.

6. Article vitrocéramique selon l'une des revendications 1 à 5, **caractérisé en ce que** le taux de recouvrement de ladite texturation est d'au moins 50% , notamment de 53% à 100%, de façon particulièrement préférée de 90% à 100%, et en particulier de l'ordre de 100%.

7. Article vitrocéramique selon l'une des revendications 1 à 6, **caractérisé en ce que** les dimensions de la base de chacun des motifs sont comprises entre 0.6 et 7.5 mm, et **en ce que** lesdits motifs présentent préférentiellement une périodicité entre 0.6 et 9.6 mm, les motifs étant préférentiellement jointifs.

8. Article vitrocéramique selon l'une des revendications 1 à 7, **caractérisé en ce que** l'article comprend également au moins un élément de chauffage et/ou une source lumineuse et/ou un afficheur sous-jacent, la distance entre le plan général de la face texturée du substrat dans ladite zone texturée et la partie supérieure dudit élément de chauffage et/ou de ladite source lumineuse et/ou dudit afficheur étant inférieure à 5 mm, en particulier inférieure à 4 mm.

9. Article vitrocéramique selon l'une des revendications 1 à 8, **caractérisé en ce que** ledit substrat est à base d'une vitrocéramique ayant de manière intrinsèque une transmission lumineuse TL sous illuminant D65 inférieure à 40% et une transmission optique entre 0.5 et 3% pour une longueur d'onde de 625 nm.

10. Procédé de fabrication d'un article en vitrocéramique selon l'une des revendications 1 à 9, dans lequel lesdits motifs sont formés par laminage de la plaque avant céramisation.

11. Procédé selon la revendication 10, **caractérisé en ce que** les motifs sur le rouleau de laminage servant à la texturation sont plus profonds que les motifs pyramidaux dudit article.

## Patentansprüche

1. Glaskeramikerzeugnis, umfassend mindestens ein Substrat, wie zum Beispiel ein Kochfeld aus Glaskeramik, wobei das Substrat in mindestens einem Bereich einer Seite eine Oberflächentexturierung in Form von Pyramidenmotiven aufweist, wobei zum Beispiel die quadratische mittlere Steigung (Rdq) der Motive mindestens 0,25 Grad ist und kleiner als 3 Grad ist, wobei die Pyramidenmotive geeignet sind, um durch Walzen des Substrats ausgebildet zu werden.

2. Glaskeramikerzeugnis nach Anspruch 1, **dadurch gekennzeichnet, dass** die Basis jedes Pyramidenmotivs ein regelmäßiges Vieleck, vor allem ein Quadrat oder ein regelmäßiges Sechseck ist.

3. Glaskeramikerzeugnis nach einem der Ansprüche 1 bis 2,
**dadurch gekennzeichnet, dass** die Höhe (H) der Motive mindestens 5 µm und vorzugsweise mindestens 10 µm ist, besonders größer als 15 µm, insbesondere mindestens 20 µm ist, und ebenfalls kleiner als 440 µm, besonders kleiner als 110 µm und vorzugsweise kleiner als 75 µm, besonders kleiner als 45 µm, vor allem kleiner als 40 µm, besonders kleiner als oder gleich 35 µm ist.

4. Glaskeramikerzeugnis nach einem der Ansprüche 1 bis 3,
**dadurch gekennzeichnet, dass** die quadratische mittlere Steigung (Rdq) der Motive mindestens 0,25°, besonders mindestens 0,3°, vor allem mindestens 0,4°, sogar mindestens 0,7°, sogar mindestens 0,8° ist und bevorzugt kleiner als 2,5°, besonders kleiner als 2°, sogar kleiner als 1,5° ist.

5. Glaskeramikerzeugnis nach einem der Ansprüche 1 bis 4,
**dadurch gekennzeichnet, dass** die Seite, die die Oberflächentexturierung aufweist, die Unter- oder Innenseite ist.

6. Glaskeramikerzeugnis nach einem der Ansprüche 1 bis 5,
**dadurch gekennzeichnet, dass** der Bedeckungsgrad der Texturierung mindestens 50 %, besonders 53 % bis 100 %, insbesondere bevorzugt 90 % bis 100 % und vor allem in der Größenordnung von 100 % ist.

7. Glaskeramikerzeugnis nach einem der Ansprüche 1 bis 6,
**dadurch gekennzeichnet, dass** die Abmessungen der Basis jedes der Motive zwischen 0,6 und 7,5 mm betragen, und **dass** die Motive bevorzugt eine Periodizität zwischen 0,6 und 9,6 mm aufweisen, wobei die Motive bevorzugt aneinander stoßend sind.

8. Glaskeramikerzeugnis nach einem der Ansprüche 1 bis 7,
**dadurch gekennzeichnet, dass** das Erzeugnis ebenfalls mindestens ein Heizelement und/oder eine Lichtquelle und/oder eine darunterliegende Anzeigeeinrichtung umfasst, wobei der Abstand zwischen der Hauptebene der texturierten Seite des Substrats in dem texturierten Bereich und dem oberen Teil des Heizelements und/oder der Lichtquelle und/oder der Anzeigeeinrichtung kleiner als 5 mm, vor allem kleiner als 4 mm ist.

9. Glaskeramikerzeugnis nach einem der Ansprüche 1 bis 8,
**dadurch gekennzeichnet, dass** das Substrat mit einer Basis aus Glaskeramik ist, die auf inhärente Weise eine Lichtübertragung TL unter Lichtart D65 kleiner als 40 % und eine optische Übertragung zwischen 0,5 und 3 % für eine Wellenlänge von 625 nm besitzt.

10. Verfahren zum Herstellen eines Erzeugnisses aus Glaskeramik nach einem der Ansprüche 1 bis 9, wobei die Motive durch Walzen des Kochfelds vor einer Keramisierung ausgebildet werden.

11. Verfahren nach Anspruch 10, **dadurch gekennzeichnet, dass** die Motive auf der Walzrolle, die der Texturierung dienen, tiefer als die Pyramidenmotive des Erzeugnisses sind.

## Claims

1. A glass-ceramic item, comprising at least a substrate, such as a sheet, of glass-ceramic, said substrate having, in at least one zone of one face, a surface texturing in the form of pyramidal motifs such that the root mean square slope (Rdq) of said motifs is at least 0.25 degrees and less than 3 degrees, said pyramidal motifs are likely to be formed by rolling the substrate.

2. The glass-ceramic item as claimed in claim 1, **characterized in that** the base of each pyramidal motif is a regular polygon, particularly a square or a regular hexagon.

3. The glass-ceramic item as claimed in one of claims 1 and 2, **characterized in that** the height (H) of said motifs is at least 5 µm and preferably at least 10 µm, in particular is greater than 15 µm, more particularly at least 20 µm, and is also less than 440 µm, in particular less than 110 µm and preferably less than 75 µm, in particular less than 45 µm, in particular less than 40 µm, in particular less than or equal to 35 µm.

4. The glass-ceramic item as claimed in one of claims 1 to 3, **characterized in that** the root mean square slope (Rdq) of said motifs is at least 0.25°, in particular at least 0.3°, particularly at least 0.4°, or even at least 0.7°, or even at least 0.8°, and is preferably less than 2.5°, particularly less than 2°, or even less than 1.5°.

5. The glass-ceramic item as claimed in one of claims 1 to 4, **characterized in that** the face exhibiting said surface texturing is the underside or internal face.

6. The glass-ceramic item as claimed in one of claims 1 to 5, **characterized in that** the fractional surface coverage of said texturing is at least 50%, in particular 53% to 100%, particularly preferably from 90% to 100%, and particularly of the order of 100%.

7. The glass-ceramic item as claimed in one of claims 1 to 6, **characterized in that** the dimensions of the base of each of the motifs are comprised between 0.6 and 7.5 mm, and **in that** said motifs preferentially have a period of between 0.6 and 9.6 mm, the motifs preferentially being contiguous.

8. The glass-ceramic item as claimed in one of claims 1 to 7, **characterized in that** the item also comprises at least one heating element and/or one light source and/or a display underlying it, the distance between the overall plane of the textured face of the substrate in said textured zone and the upper part of said heating element and/or of said light source and/or of said display being less than 5 mm, particularly less than 4 mm.

9. The glass-ceramic item as claimed in one of claims 1 to 8, **characterized in that** said substrate is based on a glass-ceramic intrinsically having a light transmission TL under D65 illuminant less than 40% and an optical transmission between 0.5 and 3% for a wavelength of 625 nm.

10. A method for manufacturing a glass-ceramic item as claimed in one of claims 1 to 9, in which said motifs are formed by rolling the sheet prior to ceramization.

11. The method as claimed in claim 10, **characterized in that** the motifs on the rolling cylinder used for texturizing are deeper than the pyramidal motifs of said item.
